# DEMANDE DE BREVET EUROPEEN

(11) **EP 4 717 634 A1**
(43) Date de publication de la demande: **01.04.2026**
(21) Numéro de dépôt: 25204150.4
(22) Date de dépôt: 23.09.2025
(51) Int. Cl.: B65G 13/11, B65G 39/12

(54) **DISPOSITIF DE FIXATION D'UN ROULEAU DE CONVOYEUR**

(30) Priorité: 25.09.2024 FR 2410261
(71) Demandeur: Exotec Product France, 59170 Croix (FR)
(72) Inventeur: CAGNAC, Bastien, 59290 WASQUEHAL (FR); VIVES, Damien, 59290 WASQUEHAL (FR)
(74) Mandataire: Plasseraud IP

(57) **Abrégé**

Dispositif de fixation d'un arbre de montage (21) d'un rouleau (2) de convoyeur (10) sur un profilé (3), le dispositif comprenant :
- une platine (4) comprenant :
∘ une ouverture (42) pour le passage de l'arbre de montage (21),
∘ une première surface de blocage (43) pour coopérer avec l'arbre de montage,
∘ un premier orifice de serrage (44),

- une pièce de serrage (5) comprenant :
∘ une deuxième surface de blocage (53) opposée à la première surface de blocage (43) coopérant avec l'arbre de montage (21),
∘ un deuxième orifice de serrage (54),

- un organe de serrage (6) traversant la platine (4), la pièce de serrage (5) et le profilé (3) par leurs orifices de serrage (34, 44, 54),
une rampe de la platine (4) ou de la pièce (5) induisant un rapprochement des deux surfaces de blocage (43, 53) pour bloquer l'arbre de montage (21).

## Description

### Domaine technique

Le domaine de la présente divulgation est celui des convoyeurs, notamment les convoyeurs présents dans des entrepôts de préparation de commande.

### Technique antérieure

Pour le transport de commandes, il est connu d'utiliser des convoyeurs à rouleaux. De manière générale, les convoyeurs comprennent une structure comprenant deux profilés latéraux, sur lesquels des portions cylindriques des rouleaux sont montées rotatifs de sorte à provoquer l'avance des commandes. Les rouleaux sont typiquement agencés parallèles entre eux, disposés entre les profilés, chacune des portions cylindriques pivotant autour d'un arbre de montage monté fixe sur les profilés. Des extrémités distales de l'arbre de montage dépassent donc des deux extrémités longitudinales de chaque portion cylindrique, et viennent se fixer respectivement sur les deux profilés, en pénétrant respectivement au travers d'ouvertures de réception ménagées dans les profilés.

Les ouvertures de réception peuvent être conçues pour présenter une forme complémentaire à celle des arbres de montage des rouleaux, qui peuvent être par exemple hexagonales, de sorte à empêcher la rotation des arbres de montage sur les profilés.

Cependant, lorsque les rouleaux sont en rotation, les frottements répétés des arbres de montage des rouleaux dans les ouvertures de réception conduisent à une usure et une déformation desdites ouvertures de réception. Cela peut engendrer un risque que les arbres de montage ne soient plus maintenus figés. Il existe ainsi un besoin de bloquer plus durablement la rotation des arbres de montage au travers de leur ouverture de réception dans les profilés, de sorte à éviter des mouvements parasites et des vibrations, voire un dysfonctionnement des rouleaux.

On connaît notamment du document US7588135, un dispositif de fixation de rouleau de convoyeur comportant trois panneaux de maintien et un moyen de fixation. Les panneaux de maintien comprennent tous une ouverture d'une forme complémentaire de celle de l'arbre de montage du rouleau et sont enfilés un à un sur ledit arbre, contre un profilé du convoyeur. Les panneaux comprennent en outre chacun un trou de fixation traversant qu'il est nécessaire d'aligner, de sorte à faire passer le moyen de fixation. À cette fin, les panneaux de maintien comprennent au moins une paire de contreformes mâle-femelle de sorte que les panneaux adjacents coopèrent l'un avec l'autre. Pour une paire de panneaux de maintien adjacents, la distance entre la contreforme mâle-femelle et le trou de fixation d'un panneau de maintien de l'une des paires de panneaux de maintien adjacents est différente de la distance entre la contreforme mâle-femelle et le trou de fixation de l'autre panneau de maintien de la paire de panneaux de maintien adjacents. De cette façon, les trois panneaux de maintien s'alignent lorsqu'ils sont montés l'un sur l'autre en venant en butée contre différentes portions de l'arbre de montage. Le moyen de fixation est monté aux travers des trois trous de fixation et au travers d'un trou ménagé dans le profilé.

On connait en outre du document JP5224598, un dispositif de fixation de rouleau de convoyeur comprenant essentiellement un moyen de fixation, un écrou en deux parties symétriques l'une de l'autre et de formes légèrement tronconiques, et deux plaques de maintien également symétriques l'une de l'autre et chacune comportant un logement tronconique adapté pour recevoir chacun une partie de l'écrou. L'écrou et les plaques de maintien sont configurés pour recevoir l'arbre de montage du rouleau de convoyeur. Le moyen de fixation est configuré pour fixer le dispositif de fixation au profilé du convoyeur et permet en outre de serrer ou desserrer les deux plaques de maintien entre lesquelles est disposé l'écrou. Une fois montées mais non serrées, les deux plaques de maintien permettent à l'écrou une certaine liberté de mouvement, en particulier un débattement angulaire en rotation autour d'un axe vertical. Une fois serrées, les deux plaques de maintien figent l'écrou.

On connait également du document EP4015418A1 un dispositif de fixation pour rouleau de convoyeur comprenant essentiellement une plaque de montage dotée d'un premier orifice, une plaque de verrouillage dotée d'un second orifice décalé par rapport au premier, et une bague insérée à travers les deux orifices. L'insertion de la bague génère une force latérale qui déplace les plaques dans des directions opposées, ce qui serre et verrouille l'arbre de montage du rouleau de convoyeur. Ce système améliore la fixation de l'arbre de montage du rouleau et réduit les vibrations.

Un autre dispositif de fixation permettant également de réduire les vibrations est décrit dans le document DE102005036756B4. Il comprend typiquement un corps de base, fixé solidement au châssis d'un convoyeur par l'intermédiaire d'une première vis, un corps de support qui reçoit l'extrémité de l'arbre de montage du rouleau et une couche intermédiaire élastique entre le corps de base et le corps de support, pour réduire les vibrations provoquées par le rouleau. Le serrage de l'arbre de montage est assuré par un coin de serrage présentant une face biseautée et actionné par une deuxième vis, vissée uniquement dans le corps de support. La première vis passe au travers du corps de support sans le toucher pour éviter que les vibrations du rouleau n'atteignent le châssis du convoyeur.

Mais ces solutions présentent des inconvénients. En particulier, elles nécessitent d'assembler de nombreuses pièces entre elles et sont donc complexes à installer. Cette complexité peut avoir un impact direct sur le coût de montage du convoyeur et sur la fiabilité du maintien du rouleau sur le profilé. En effet, le nombre de pièces du dispositif multiplie d'autant le risque de formation de jeux de montage dues aux dispersions de fabrication de chaque pièce, et il peut en résulter des jeux néfastes pouvant être à l'origine de vibrations dans le convoyeur.

La présente divulgation a donc pour objectif de pallier au moins en partie les inconvénients de l'état de la technique cités ci-dessus.

### Résumé

Selon un premier aspect, les objectifs mentionnés ci-dessus sont atteints notamment par un dispositif de fixation d'un rouleau de convoyeur sur un profilé, le rouleau comprenant une portion cylindrique et un arbre de montage s'étendant en saillie d'un flan de la portion cylindrique, l'arbre de montage comprenant une extrémité distale traversant le profilé par une ouverture de réception, le dispositif de fixation comprenant :
- une platine, comprenant :
   ∘ une surface arrière configurée pour reposer contre le profilé,
   ∘ une ouverture configurée pour permettre le passage de l'extrémité distale de l'arbre de montage du rouleau,
   ∘ une première surface de blocage définissant une portion d'un contour de l'ouverture, la première surface de blocage étant configurée pour coopérer avec une première partie de la surface extérieure radiale de l'arbre de montage du rouleau,
   ∘ un premier orifice de serrage traversant la platine et débouchant sur la surface arrière,
- une pièce de serrage, destinée à être positionnée dans la platine, et comprenant :
   ∘ une deuxième surface de blocage en vis-à-vis de la première surface de blocage de la platine, la deuxième surface de blocage étant configurée pour coopérer avec une deuxième partie de la surface extérieure radiale de l'arbre de montage du rouleau, ladite deuxième partie étant opposée à la première partie de la surface extérieure radiale de l'arbre de montage,
   ∘ un deuxième orifice de serrage faisant face au premier orifice de serrage de la platine,
- un organe de serrage configuré pour traverser à la fois le deuxième orifice de serrage de la pièce de serrage, le premier orifice de serrage de la platine, et un troisième orifice de serrage du profilé, l'organe de serrage permettant un rapprochement de la platine et de la pièce de serrage selon une direction de rapprochement,
l'une de la platine ou de la pièce de serrage comprenant une rampe inclinée, et l'autre comprenant une portion de glissement configurée pour coopérer avec la rampe, de sorte que le serrage de l'organe de serrage induise un rapprochement de la deuxième surface de blocage vers la première surface de blocage de la platine selon une direction de serrage jusqu'à bloquer l'arbre de montage du rouleau.

Ainsi, la solution proposée présente, entre autres, l'avantage d'être plus facile et rapide à monter sur le profilé que les solutions existantes. En effet, l'assemblage du dispositif est réalisé aisément puisqu'il ne comprend que deux pièces, fixées l'une à l'autre et qui peuvent être serrées par l'organe de serrage, tel qu'une vis de serrage. En particulier, l'organe de serrage, en particulier la vis de serrage, assure à la fois la fonction de maintien du dispositif sur le profilé, et la fonction de serrage de l'arbre de montage du rouleau. Le dispositif de fixation peut ainsi comprendre un tel organe de serrage, unique, en particulier une unique vis de serrage.

Par ailleurs, la solution proposée fait preuve d'une meilleure fiabilité. Le dispositif permet de garantir le blocage de l'arbre de montage du rouleau sans réglage supplémentaire. En effet, la coopération entre la rampe et la portion de glissement réalise une opération de serrage qui réduit la probabilité de formation d'un jeu au niveau du maintien du rouleau.

De plus, lorsque l'extrémité du rouleau que l'on cherche à fixer est munie d'un câble doté d'un connecteur, l'ouverture ménagée dans la platine permet de garantir le passage du câble et du connecteur sans les endommager.

En outre, le dispositif selon la présente divulgation est particulièrement bon marché à produire, du fait de sa conception en deux pièces seulement.

En outre, il devient possible de serrer l'arbre de montage et fixer le dispositif par un même organe de fixation, qui peut être unique. Le temps de montage d'un tel dispositif de fixation comportant, selon un mode de réalisation, un unique organe de fixation, en particulier une unique vis de serrage, est avantageusement réduit.

Les caractéristiques exposées dans les paragraphes suivants peuvent, optionnellement, être mises en oeuvre, indépendamment les unes des autres ou en combinaison les unes avec les autres :

Selon un exemple, l'organe de serrage comprend une vis de serrage coopérant avec un écrou pour rapprocher la platine et la pièce de serrage, la rampe étant inclinée par rapport à l'axe de la vis de serrage.

Selon un exemple, la rampe forme un angle avec la direction de rapprochement compris entre 3° et 22°, préférentiellement l'angle de la rampe est sensiblement égal à 5° ou sensiblement égal à 20°.

Selon un exemple, la direction de rapprochement est perpendiculaire à la direction de serrage.

Selon un exemple, une portion de l'ouverture de la platine est partiellement obstruée par la pièce de serrage lors du serrage de l'organe de serrage, de sorte qu'une fois le serrage effectué, l'aire de la portion de l'ouverture obstruée représente au moins 50% de l'aire de l'ouverture.

Selon un exemple, la platine comprend deux parois latérales de guidage, s'étendant au moins partiellement entre la première surface de blocage et l'une ou l'autre de la rampe ou de la portion de glissement selon la direction de serrage, les parois latérales de guidage étant configurées pour coopérer avec des côtés latéraux de la pièce de serrage.

Selon un exemple, les deux parois latérales de guidage comprennent chacune une nervure de guidage présentant une surface de butée s'étendant perpendiculairement à la direction de rapprochement, une surface de butée complémentaire de la pièce de serrage étant configurée pour coopérer avec la surface de butée des deux nervures de guidage de la platine afin de guider la pièce de serrage et d'empêcher qu'elle ne s'éloigne du profilé lors du serrage de la vis de serrage.

Selon un exemple, la platine présente un passage latéral traversant l'une des parois latérales de guidage, la pièce de serrage comprenant une encoche positionnée de sorte que le passage latéral de la platine débouche sur ladite encoche de la pièce de serrage lorsque l'organe de serrage, tel que la vis de serrage, est serré.

Selon un exemple, l'arbre de montage du rouleau présente une section transversale hexagonale, la première surface de blocage et la deuxième surface de blocage comprenant chacune deux pans opposés adjacents et inclinés l'un par rapport à l'autre.

Selon un exemple, la première surface de blocage et la deuxième surface de blocage comprenant chacune une rainure creusée dans l'une et l'autre de la platine et de la pièce de serrage, chaque rainure étant positionnée de sorte qu'elle s'étende en lieu et place d'une arête commune aux deux pans adjacents.

Selon un exemple, la platine et la pièce de serrage sont réalisées par injection d'un métal ou d'un alliage de métaux, en particulier un alliage comprenant au moins un métal choisi parmi le zinc, l'aluminium, le magnésium ou le cuivre.

Selon un deuxième aspect, la présente divulgation concerne également un convoyeur comprenant un profilé et un rouleau comprenant une portion cylindrique et un arbre de montage s'étendant en saillie d'un flan de la portion cylindrique, l'arbre de montage comprenant une extrémité distale traversant le profilé par une ouverture de réception, le rouleau étant fixé sur le profilé par un dispositif de fixation tel que décrit précédemment.

Selon un exemple, un canal débouche de l'extrémité distale de l'arbre de montage du rouleau, le rouleau comprenant un câble électrique muni d'un connecteur sortant à l'extérieur du rouleau par ledit canal.

Selon un exemple, la platine et la pièce de serrage s'étendent en longueur selon une direction verticale, la première partie de l'arbre de montage étant une portion supérieure de l'arbre de montage sur laquelle repose par gravité la première surface de blocage de la platine lorsqu'elle est positionnée contre le profilé, et la deuxième partie de l'arbre de montage étant une portion inférieure de l'arbre de montage, la direction de serrage étant selon la direction verticale.

Selon un troisième aspect, la présente divulgation concerne également un procédé de fixation d'un rouleau de convoyeur sur un profilé avec un dispositif de fixation tel que décrit précédemment, le rouleau comprenant une portion cylindrique et un arbre de montage s'étendant en saillie d'un flan de la portion cylindrique, l'arbre de montage comprenant une extrémité distale traversant le profilé par une ouverture de réception, le procédé comprenant :
- le passage de l'arbre de montage du rouleau à travers l'ouverture de réception du profilé,
- le positionnement de la platine de sorte que la première surface de blocage coopère avec une première partie de la surface extérieure radiale de l'arbre de montage du rouleau, et de sorte que la surface arrière de la platine soit plaquée contre le profilé, et de sorte que le premier orifice de serrage soit positionné en vis-à-vis du troisième orifice de serrage du profilé,
- le montage de la pièce de serrage sur la platine, en positionnant la pièce de serrage de sorte que l'une de la rampe ou de la portion de glissement coopère avec l'autre de la rampe ou de la portion de glissement, et de sorte que le second orifice de serrage de la pièce de serrage soit en vis-à-vis du premier orifice de serrage de la platine, et de sorte que la deuxième surface de blocage soit en vis-à-vis de la première surface de blocage de telle façon que l'arbre de montage du rouleau s'étende entre la première surface de blocage et la seconde surface de blocage du dispositif,
- le passage d'une vis de serrage au travers des premier, deuxième et troisièmes orifices de serrage,
- le serrage de l'organe de serrage, faisant que la pièce de serrage se rapproche de la platine de sorte qu'un glissement relatif entre la portion de glissement et la rampe induise un rapprochement de la deuxième surface de blocage vers la première surface de blocage de la platine jusqu'à bloquer l'arbre de montage du rouleau.

Selon un exemple, la platine du dispositif comprend deux parois latérales de guidage, s'étendant au moins partiellement entre la première surface de blocage et l'une ou l'autre de la rampe ou de la portion de glissement, les parois latérales de guidage étant configurées pour coopérer avec des côtés latéraux de la pièce de serrage, le procédé comprenant, lors du montage de la pièce de serrage sur la platine, l'insertion de la pièce de serrage entre les deux parois latérales de guidage de la platine.

Selon un exemple, les deux parois latérales de guidage comprennent chacune une nervure de guidage présentant une surface de butée s'étendant parallèlement à la surface arrière de la platine, une surface de butée complémentaire de la pièce de serrage étant configurée pour coopérer avec la surface de butée des deux nervures de guidage de la platine, le procédé comprenant, lors de l'insertion de la pièce de guidage entre les parois latérales de guidage, le passage de la surface de butée complémentaire sous la surface de butée des nervures de guidage de la platine.

### Brève description des dessins

D'autres caractéristiques, détails et avantages apparaîtront à la lecture de la description détaillée ci-après, et à l'analyse des dessins annexés, sur lesquels :
[Fig. 1] montre sur une première vue 1A une représentation schématique d'un convoyeur selon un exemple, puis sur une vue 1B une représentation vue de plus près d'un arbre de montage vue de l'extérieur du convoyeur selon un exemple, correspondant à la zone encerclée en pointillée sur la vue 1A.
[Fig. 2] montre une représentation schématique vue de face d'un exemple de dispositif de fixation selon la présente divulgation, vue de l'extérieur du profilé,
[Fig. 3] montre une représentation schématique d'une vue de face d'une platine du dispositif de fixation de la figure 2,
[Fig. 4] montre une représentation schématique d'un rouleau, d'un profilé et du dispositif de fixation de la figure 2 vue en coupe selon un plan comprenant l'axe du rouleau,
[Fig. 5] montre une représentation schématique d'une platine et d'une pièce de serrage du dispositif de fixation de la figure 2, vue en coupe selon le plan A-A sur une première vue 5A et vue de face sur une deuxième vue 5B,
[Fig. 6] montre une représentation schématique en perspective d'une platine et d'une pièce de serrage du dispositif de fixation de la figure 2, la pièce de serrage étant inclinée en vue d'être insérée dans la platine,
[Fig. 7] montre une représentation schématique en perspective, vue de l'extérieur du profilé, sur laquelle on voit l'assemblage des différentes pièces qui composent le dispositif de fixation de la figure 2,
[Fig. 8] montre deux représentations schématiques d'une platine et d'une pièce de serrage similaires à celles des vues 5A et 5B de la figure 5, sur laquelle sont visibles les efforts qui entrent en jeu lors du serrage de l'arbre de montage, et lors de la rotation du rouleau, selon des exemples de la présente divulgation,
[Fig. 9] montre une représentation schématique du dispositif de fixation de la figure 2, vue en coupe selon un plan comprenant l'axe du rouleau, la première vue 9A montrant une configuration initiale au serrage du dispositif de fixation, la vue 9B montrant une configuration à un état final, lorsque le serrage est effectué, selon un exemple de la présente divulgation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures. Par ailleurs, le terme « sensiblement » est à interprété comme indiquant que le résultat obtenu l'est de façon aussi précise que la méthode connue pour le mesurer.

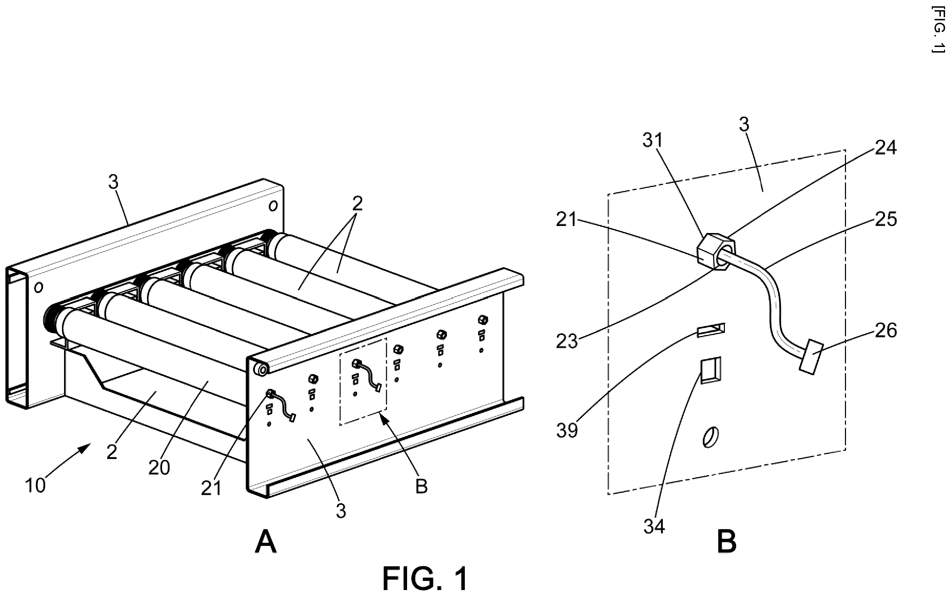

Il est maintenant fait référence à la figure 1.

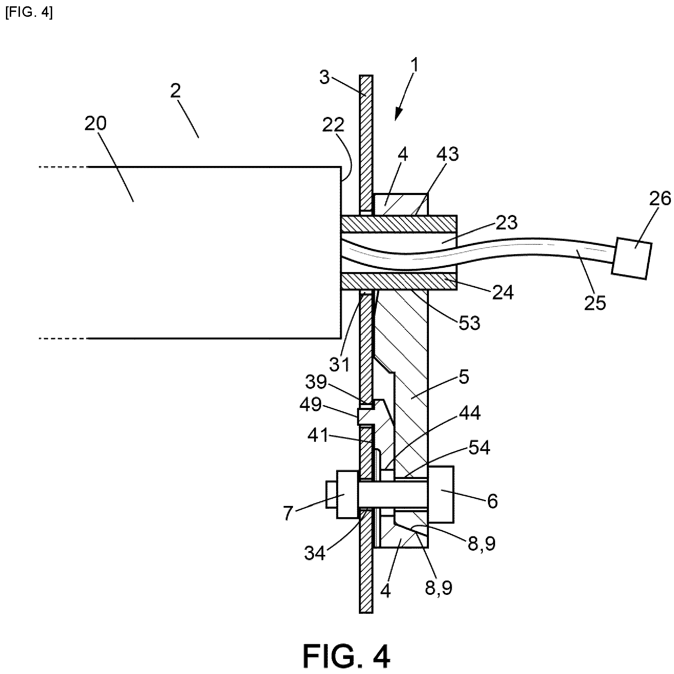

La figure 1 montre un convoyeur 10 sur lequel est monté une pluralité de rouleaux 2. Les rouleaux 2 sont montés entre deux profilés 3 latéraux, fixés en vis-à-vis l'un de l'autre. Les profilés 3 sont par exemple fixé au sol (non représenté) ou à une structure fixe. Chaque rouleau 2 comprend une portion cylindrique 20 destinée à permettre le roulage des marchandises selon une direction transversale aux rouleaux, dans un volume situé entre les deux profilés 3 et au-dessus des portions cylindriques 20 des rouleaux 2. La portion cylindrique 20 est fermée latéralement par deux flancs 22 latéraux (figure 4). Selon une configuration, ces flancs 22 s'étendent sensiblement parallèlement aux profilés 3, et sensiblement perpendiculairement à l'axe du rouleau 2.

Les rouleaux 2 comprennent chacun également un arbre de montage 21, qui s'étend en saillie des deux flancs 22 de la portion cylindrique 20. Chaque rouleau 2 comprend en particulier un unique arbre de montage 21 qui le traverse sur toute sa longueur, et dépasse de chaque côté du rouleau, par-delà ces flancs 22. Dans d'autres exemples, chaque extrémité du rouleau 2 est muni d'un arbre de montage 21 spécifique.

Selon des exemples, l'arbre de montage 21 comprend un canal 23 duquel sort un câble 25 muni d'un connecteur 26. Un tel connecteur est notamment présent dans un rouleau 2 motorisé. Typiquement, un convoyeur 10 peut comprendre un ou plusieurs rouleaux 2 dont la rotation est entraînée par un actionneur logé dans ledit rouleau 2. Le convoyeur peut alors comprendre un ensemble de courroies, liées au rouleau actionné, et configurées pour transmettre ladite rotation aux autres rouleaux non motorisés.

Dans le cas d'un rouleau comprenant un câble 25, l'arbre de montage 21 peut comprendre, une première extrémité distale qui n'est pas traversée par le câble, et une deuxième extrémité distale au travers de laquelle un canal est percé pour laisser passer le câble 25. Ledit câble 25 est typiquement branché à un autre connecteur, à l'extérieur du rouleau 2, par exemple au niveau d'un profilé 3. Dans l'exemple représenté en figure 1, un câble 25 est présent à une extrémité distale 24 de l'arbre de montage 21 et est particulièrement visible en figure 1B. Dans un exemple, le canal 23 est traversant sur toute la longueur de l'arbre de montage 21, et ainsi débouche aussi du côté duquel le câble ne sort pas. Dans d'autre exemple, le canal 23 ne se prolonge pas du côté qui n'est pas traversé d'un câble, et dans ce cas l'extrémité distale de l'arbre de montage 21 est pleine.

Pour la concision de la description, sauf mention contraire, une seule extrémité d'un cylindre est généralement décrite, et il est entendu que l'autre extrémité présente les mêmes caractéristiques, par exemple par symétrie selon un plan transversal médian de la portion cylindrique. Un seul cylindre est généralement décrit, mais il est entendu que, selon des exemples, le convoyeur comprend aussi d'autres rouleaux présentant les mêmes caractéristiques.

L'arbre de montage 21 comprend typiquement une extrémité distale 24 traversant le profilé 3 par une ouverture de réception 31 ménagée dans le profilé 3. Selon un exemple, et notamment tel que représenté sur les figures, l'arbre de montage est typiquement hexagonal et de ce fait, l'ouverture de réception 31 présente, au moins sur une majeure partie de son contour, une forme hexagonale. Une telle complémentarité de forme permet de réaliser un premier blocage de la rotation de l'arbre de montage 21 par rapport au profilé 3. D'autres formes d'ouverture de réception 31 et d'arbre de montage 21 peuvent être envisagées, et ce premier blocage en rotation est optionnel.

Selon des exemples, et dans les cas où l'une des deux extrémités de l'arbre de montage 21 laisse sortir un câble 25 et son connecteur 26, il peut être prévu que l'ouverture de réception 31 soit configurée pour laisser passer le connecteur 26 et le câble 25. Notamment, l'ouverture de réception 31 présente une dimension supérieure à celle du connecteur 26, qui est typiquement plus grand qu'un diamètre du câble 25. Selon un exemple particulier, l'ouverture de réception 31 est hexagonale sur une majeure partie de son contour, puis présente une portion rectangulaire de sorte à agrandir la surface formée par l'ouverture tout en permettant un premier blocage en rotation de l'arbre de montage 21.

Une fois montée sur le profilé 3, la portion cylindrique 20 du rouleau 2 s'étend d'un premier côté du profilé orienté vers l'intérieur du convoyeur 10, et l'extrémité distale 24 de l'arbre de montage 21 s'étend d'un deuxième côté du profilé, orienté vers l'extérieur du convoyeur 10. Dans les cas où ladite extrémité 24 est traversée d'un câble, ce câble s'étend d'un côté extérieur du profilé 3.

Selon des exemples l'extrémité distale 24 de l'arbre de montage 21 peut s'étendre à une distance comprise entre 10 et 50 mm du profilé.

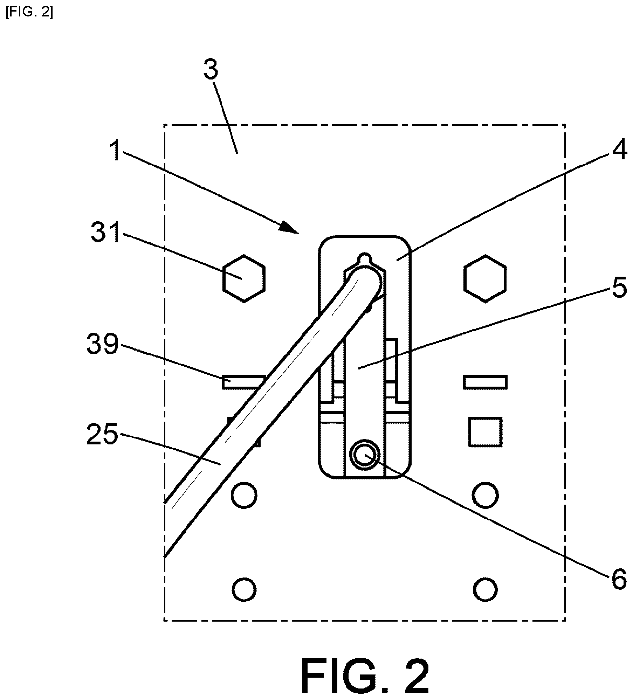

Selon la présente divulgation, le ou les rouleaux sont maintenus sur les profilés 3 par un dispositif de fixation 1, dont un exemple est notamment représenté en figure 2.

Le dispositif de fixation 1, selon la présente divulgation, comprend deux pièces principales : une platine 4 et une pièce de serrage 5. Chacune de la platine 4 ou de la pièce de serrage 5 peut être monobloc, c'est-à-dire d'un seul tenant.

La platine 4 et la pièce de serrage 5 peuvent être réalisées chacune par injection d'un métal ou d'un alliage de métaux dans un moule. En particulier, le métal ou l'alliage de métaux comprend un métal choisi parmi le zinc, l'aluminium, le magnésium, le cuivre ou une combinaison de ceux-ci. Il est également possible que la platine 4 et/ou la pièce de serrage 5 soient réalisées dans un matériau plastique.

Comme illustré sur la figure 4, la platine 4 comprend premièrement une surface arrière 41 configurée pour reposer contre le profilé 3. De manière générale, la surface arrière 41 de la platine 4 est plaquée contre le profilé d'un côté extérieur du profilé 3.

La platine 4 comprend en outre une ouverture 42 configurée pour permettre le passage de l'extrémité distale 24 de l'arbre de montage 21 du rouleau 2. L'ouverture traverse la platine de part en part, notamment d'avant en arrière, et débouche à l'arrière de la platine par la surface arrière 41.

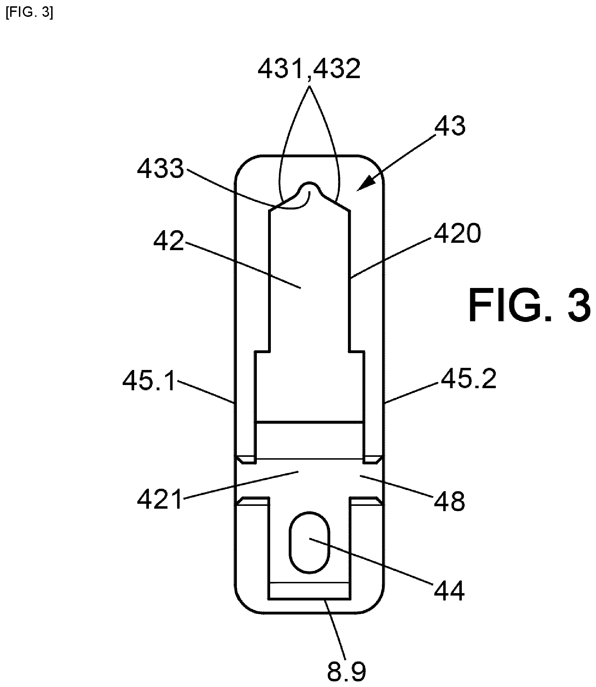

Selon les cas, un câble 25 muni d'un connecteur 26 peut traverser le canal 23 de l'arbre de montage 21 et dans ce cas, l'ouverture 42 est notamment dimensionnée pour permettre le passage du connecteur 26. Un exemple de dispositif de fixation 1 est montré en figure 3, sur laquelle l'ouverture 42 est particulièrement visible.

La platine 4 comprend également une première surface de blocage 43 définissant une limite de l'ouverture 42, préférentiellement une limite supérieure de l'ouverture 42 quand la platine est positionnée verticalement. La première surface de blocage 43 présente une forme qui lui permet de coopérer avec une surface extérieure radiale 210 de l'arbre de montage 21.

De manière générale, la première surface de blocage 43 est configurée pour coopérer avec une première partie 211 de la surface extérieure radiale 210 de l'arbre de montage 21 du rouleau 2.

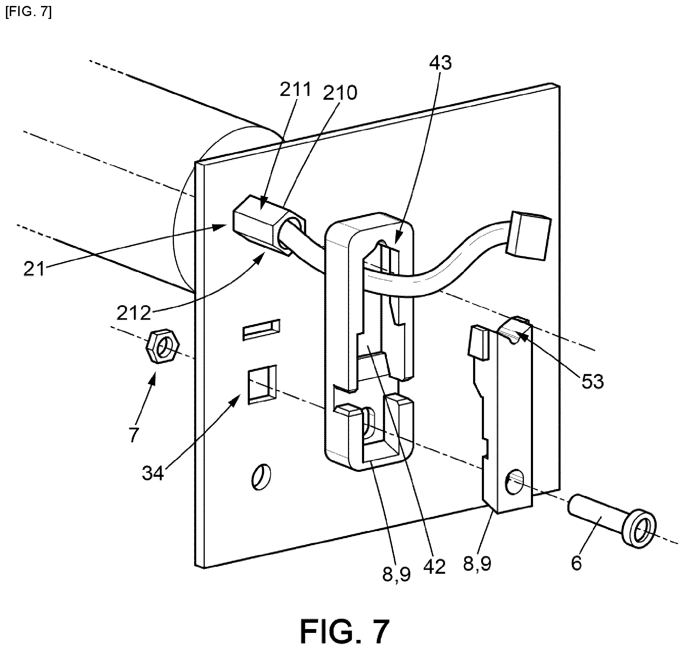

Selon un exemple, cette première partie 211 est une partie supérieure de l'arbre de montage 21, notamment selon l'exemple représenté en figure 7. En particulier, l'arbre de montage 21 peut comprendre une première partie supérieure et une deuxième partie inférieure, délimitée par un plan horizontal médian de l'arbre de montage 21. La première partie supérieure étant orientée vers le haut lorsque le convoyeur 10 est posé sur le sol en position normale d'utilisation, et la deuxième partie inférieure étant orientée vers le bas. Dans une telle configuration, la première surface de blocage 43 est configurée pour coopérer, par exemple par complémentarité de forme, avec la première partie supérieure de l'arbre de montage 21.

Par ailleurs, la platine 4 comprend un premier orifice de serrage 44 traversant la platine 4 et débouchant sur la surface arrière 41. Selon un exemple, le premier orifice de serrage 44 peut être une portion de l'ouverture 42. En d'autres termes, l'ouverture 42 peut s'étendre jusqu'à inclure ledit premier orifice de serrage 44. Autrement dit, selon des exemples, le premier orifice de serrage 44 et l'ouverture 42 ne sont pas séparés par la matière qui constitue la platine 4 et forment une seule ouverture.

Selon un exemple particulier, et notamment tel que représenté en figure 3 et 7, la platine 4 peut comporter un fond 421, sur lequel et à travers lequel est ménagé le premier orifice de serrage 44. Dans ce cas, l'ouverture 42 et le premier orifice de serrage 44 sont distincts. Le fond 421 peut permettre de faciliter le positionnement de la pièce de serrage 5 dans la platine en évitant à la pièce de serrage de passer à travers l'ouverture 42 de la platine.

Outre la platine 4, le dispositif 1 comprend une pièce de serrage 5. Cette pièce de serrage 5 est typiquement distincte de la platine 4.

La pièce de serrage 5 est destinée à être positionnée sur ou dans la platine 4. À cette fin, la platine 4 peut comprendre un logement dimensionné pour pouvoir accueillir la pièce de serrage 5. Selon un exemple, un tel logement peut comporter deux parois latérales de guidage 45.1 et 45.2, qui délimitent latéralement le logement de la pièce de serrage 5. La pièce de serrage peut alors présenter des côtés latéraux 55.1, 55.2, sensiblement espacés d'une distance légèrement inférieure à celle qui sépare les deux parois latérales de guidage de la platine 4.

Selon un exemple, les parois latérales de guidage 45.1, 45.2 s'étendent de part et d'autre de l'ouverture 42.

La pièce de serrage 5 comprend une deuxième surface de blocage 53 qui, lorsque la pièce de serrage 5 est positionnée dans la platine 4, se trouve en vis-à-vis de la première surface de blocage 43 de la platine 4. En effet, la deuxième surface de blocage 53 est configurée pour coopérer avec une deuxième partie 212 de la surface extérieure radiale 210 de l'arbre de montage 21 du rouleau 2, ladite deuxième partie 212 étant opposée à la première partie 211 de la surface extérieure radiale 210 de l'arbre de montage 21. Il est entendu par « opposée », que la première et la deuxième partie 211, 212 de l'arbre de montage 21 sont positionnées de sorte que les forces exercées sur elles par la première et la deuxième surface de blocage 43, 53 s'annulent et maintiennent l'arbre de montage en « sandwich » entre la platine 4 et la pièce de serrage 5. Il est donc admis que la première surface de blocage et la deuxième surface de blocage peuvent ne pas être de même forme, ni même être symétriques l'une de l'autre par rapport à un plan horizontal médian.

Selon un exemple, la platine 4 peut présenter une épaisseur inférieure à la distance dont l'arbre de montage 21 dépasse du profilé 3, notamment au niveau de la première surface de blocage 43. De cette façon, lorsque la platine 4 est plaquée contre le profilé, et l'arbre de montage 21 traverse l'ouverture 42, une portion de l'arbre de montage 21 s'étend au-delà de la platine vers l'extérieur du convoyeur 10. De cette façon, il est garanti qu'une portion suffisante de l'arbre de montage est en prise entre les surfaces de blocage 43, 53 de la platine 4 et de la pièce de serrage 5.

Selon un exemple, cette deuxième partie 212 est une partie inférieure de l'arbre de montage 21. En particulier, lorsque la première surface de blocage 43 est configurée pour coopérer avec une partie supérieure de l'arbre de montage 21, alors la deuxième surface de blocage 53 de la pièce de serrage est configurée pour coopérer avec une partie inférieure de l'arbre de montage 21. De cette façon, les forces induites par ces surfaces sur l'arbre de montage 21 s'annulent lors du serrage pour réaliser le blocage de l'arbre de montage 21, par exemple d'une manière comparable à celle d'un mandrin.

Selon un exemple, la première surface de blocage 43 et la deuxième surface de blocage 53 présentent, à eux deux, au moins trois points d'appui sur l'arbre de montage 21, de sorte à garantir un blocage de l'arbre de montage 21 dans toutes les directions. Notamment, et comme dans l'exemple représenté sur les figures, elles présentent quatre points d'appui, constituées par quatre surfaces en appuis sur l'arbre. D'autres configurations sont bien entendu possibles.

La pièce de serrage 5 comprend en outre un deuxième orifice de serrage 54 traversant la pièce de serrage de part en part, typiquement d'avant en arrière. Lorsque la pièce de serrage 5 est positionnée dans la platine 4, le deuxième orifice de serrage 54 est configuré pour être positionné en face du premier orifice de serrage 44 de la platine 4.

À cette fin, lorsque la platine 4 comprend des parois latérales de guidage 45.1, 45.2 qui délimitent latéralement le logement de la pièce de serrage 5, le premier orifice de serrage 44 de la platine peut être centré à égale distance latéralement des deux parois latérales de guidage 45.1, 45.2, de même que le deuxième orifice de serrage 54 peut être centré de sorte à être positionné à égale distance des deux côtés latéraux 55.1, 55.2 de la pièce de serrage 5, pour garantir un alignement des deux orifices l'un par rapport à l'autre.

En outre, le dispositif de fixation 1 comprend un organe de serrage 6 configuré pour traverser à la fois le deuxième orifice de serrage 54 de la pièce de serrage 5, le premier orifice de serrage 44 de la platine 4, et un troisième orifice de serrage 34 du profilé 3. Selon un exemple, et notamment tel que représenté sur les figures, l'organe de serrage est inséré par un côté extérieur du profilé 3 de manière à traverser d'abord la pièce de serrage 5, ensuite la platine 4, puis enfin le profilé 3, jusqu'à déboucher d'un côté intérieur du profilé 3. Il est bien entendu possible également d'insérer l'organe de serrage 6 d'un côté intérieur du profilé 3. L'organe de serrage 6 est configuré pour rapprocher la pièce de serrage 5 et la platine 4 l'une de l'autre selon une direction de rapprochement, en particulier la direction de rapprochement peut être parallèle à la direction d'élongation de l'arbre de montage 21.

Le dispositif selon la présente divulgation est avantageux notamment en ce qu'il est à la fois fixé au profilé et serré par un unique organe de serrage.

Il est entendu par « organe de serrage » tout élément ou mécanisme permettant un rapprochement entre deux surfaces opposées l'une à l'autre, se rapprochant l'une de l'autre le long d'une unique pièce traversante, par exemple présentant la forme d'une tige. Ledit organe de serrage 6, dans un exemple de la présente divulgation, peut être configuré pour rapprocher une première surface de serrage, par exemple portée par une tête de vis en contact avec la pièce de serrage, d'une seconde surface de serrage, par exemple portée par un écrou en contact avec le profilé 3, le long de la tige de la vis. Selon la présente divulgation, l'organe de serrage 6 peut être constitué d'une seule pièce (par exemple une vis coopérant avec un taraudage dans le profilé), voire de seulement deux pièces (par exemple une vis et un écrou, ou encore un mécanisme de serrage rapide comprenant une tige dotée d'une butée et une tête de serrage rotative comprenant une portion excentrique).

Il est ainsi possible de rajouter, sans sortir du cadre de la présente divulgation, d'autres organes, par exemple de fixation pour maintenir la platine 4 au profilé 3.

Selon la présente divulgation, l'organe de serrage 6 peut comprendre une unique pièce traversante, pénétrant à la fois le premier, le deuxième et le troisième orifice de serrage. L'organe de serrage peut comprendre d'autres pièces en coopération avec cette unique pièce traversante de sorte à former deux surfaces se rapprochant l'une de l'autre, pour induire un rapprochement de la pièce de serrage 5 vers la platine 4.

L'une de la platine 4 ou de la pièce de serrage 5 comprend en outre une rampe 8 inclinée permettant d'accompagner le rapprochement de la pièce de serrage 5 vers la platine 4 d'un mouvement de translation de la pièce de serrage 5 vers l'arbre de montage 21. À cette fin, l'autre de la platine ou de la pièce de serrage comprend une portion de glissement 9 configurée pour coopérer avec la rampe 8, de sorte que le serrage de l'organe de serrage 6 induise un rapprochement de la deuxième surface de blocage 53 vers la première surface de blocage 43 de la platine 4 selon une direction de serrage jusqu'à bloquer l'arbre de montage 21 du rouleau 2.

Selon un exemple, la platine 4 reste immobile pendant l'action de serrage, la première surface de blocage 43 étant déjà en contact avec l'arbre de montage 21. En effet, dans ce cas, c'est la pièce de serrage 5 qui est mue en translation le long de la direction de serrage, et seule la deuxième surface de blocage 53 se déplace en se rapprochant de la première surface de blocage 43 qui demeure immobile.

Selon une configuration dans laquelle la platine s'étend en longueur verticalement, la direction de serrage est verticale, et le rapprochement de la pièce de serrage 5 par rapport à la platine 4 est horizontal, selon la direction d'élongation de l'arbre de montage. C'est le cas notamment sur les exemples non limitatifs représentés sur les figures.

Lorsque l'organe de serrage comprend une vis, ou une tige traversant les orifices de serrage, la rampe est inclinée par rapport à l'axe de la vis, ou à l'axe de la tige le cas échéant.

Selon un exemple, en considérant le « bas » comme étant à proximité du profilé 3, et le « haut » comme étant à distance du profilé 3 lorsque le dispositif est monté sur le convoyeur 10, un point haut de la rampe 8 est plus éloigné de la deuxième surface de blocage 53 qu'un point bas de la rampe 8, de sorte qu'en glissant d'un point haut à un point bas de la rampe 8 en se rapprochant de la platine 4, la pièce de serrage 5 se rapproche également de l'arbre de montage 21 du rouleau 2, la deuxième surface de blocage 53 se rapprochant alors de la première surface de serrage 43 induisant un effort de serrage sur l'arbre de montage 21 pris « en sandwich » entre les deux.

Selon des exemples, il est possible que la rampe 8 soit une première rampe et que la portion de glissement 9 comporte une deuxième rampe complémentaire de la première rampe 8. Une telle configuration permet notamment d'autoriser une tolérance plus grande pour les dimensions de la platine et de la pièce de serrage. La présence d'une première rampe et d'une deuxième rampe complémentaire peut notamment permettre de réduire la pression de contact entre ces deux pièces et donc de limiter leur déformation. Un tel exemple est notamment représenté sur les figures. Dans ce cas, la première rampe et la deuxième rampe peuvent présenter un angle d'inclinaison identique.

Selon d'autres exemples, la portion de glissement 9 peut être une arête, un congé ou un chanfrein, ou encore un arrondi quelconque, pouvant présenter des dispositions utiles à réduire les frottements entre les deux pièces, par exemple une réduction locale de la surface de contact ou un revêtement adapté.

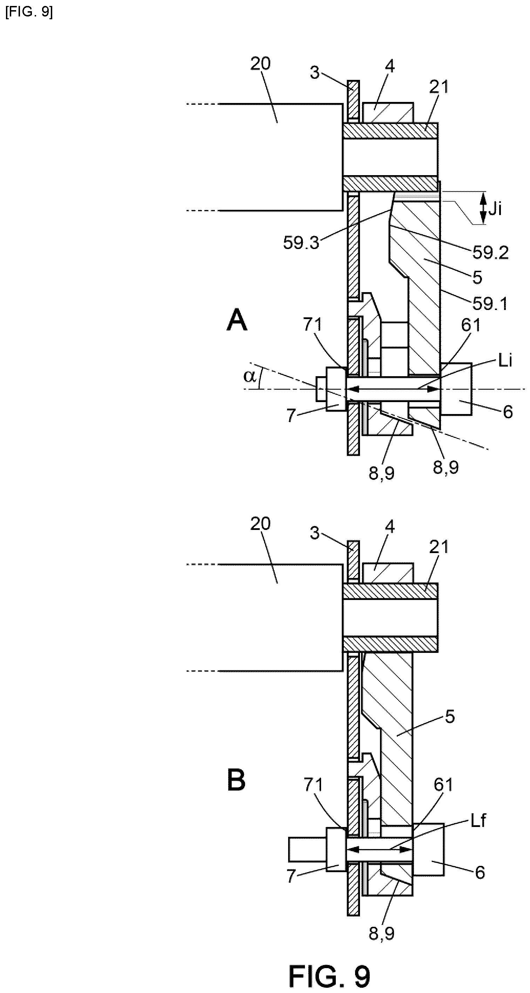

Selon un exemple, la rampe forme un angle α avec l'axe de la vis ou de la tige compris entre 3° et 22°. Préférentiellement l'angle de la rampe est sensiblement égal à 5° ou sensiblement égal à 20°. Selon la configuration, il est possible qu'un angle plus faible, ici par exemple 5°, donne plus de stabilité à l'ensemble, de manière qu'il serait même possible de maintenir un blocage satisfaisant après avoir retiré l'organe de serrage 5. Cela peut engendrer également davantage de difficultés à retirer l'organe de serrage, qui peut se retrouver bloqué entre la platine 4 et l'arbre de montage 21. A l'inverse, il est possible qu'un angle plus élevé, ici par exemple 20°, donne davantage de souplesse, de sorte que la pièce de serrage 5 soit plus facile à retirer de la platine 4, une fois serrée. L'angle α formé entre l'axe de l'organe de serrage 6 et la rampe 8 est particulièrement visible en figure 9, selon un exemple.

De manière générale, la platine 4 comprend un contour 420, dont au moins une portion délimite l'ouverture 42. Selon un exemple, ce contour est de forme rectangulaire. En position de montage, la longueur de ce contour peut s'étendre verticalement, de sorte que sa largeur se mesure horizontalement. Selon un exemple, sa longueur est plus grande que sa largeur, par exemple sa longueur est au moins deux fois plus grande que sa largeur.

Selon un exemple, ce contour 420 s'étend en saillie de façon perpendiculaire à la surface arrière 41 de la platine, et l'intérieur de ce contour 420 délimite un logement destiné à accueillir la pièce de serrage 5. Comme il a été décrit précédemment, selon un exemple, un tel contour peut présenter des parois latérales de guidage 45.1, 45.2, aptes à guider les côtés latéraux 55.1, 55.2 de la pièce de serrage 5 selon la direction de serrage.

Selon une configuration, le contour 420 peut comporter un petit côté supérieur, lequel comporte la première surface de blocage 43, deux grands côtés latéraux, pouvant le cas échéant comprendre des parois latérales de guidage 45.1, 4.2, et un petit côté inférieur comportant typiquement l'une ou l'autre de la rampe 8 ou de la portion de glissement 9. Selon cette configuration, lors de son positionnement, il est possible que la platine 4 soit suspendue verticalement sur l'arbre de montage 21 par la première surface de blocage 43, et s'étende naturellement par gravité vers le bas, de sorte que le premier orifice de serrage 44 se trouve naturellement en face du troisième orifice de serrage 34 du profilé 3, ménagé pour être aligné verticalement avec l'ouverture de réception de l'arbre de montage 21. De cette façon, un opérateur qui monte une telle platine n'est pas contraint de maintenir en position avec sa main la platine 4 sur le profilé 3, par exemple lorsqu'il approche la pièce de serrage 5.

D'autres configurations sont bien entendu possibles dans lesquelles la platine s'étend par exemple horizontalement par rapport à l'arbre de montage 21, ou par exemple verticalement vers le haut. La platine 4 peut par ailleurs présenter une forme générale autre qu'une forme rectangulaire.

Selon un exemple, la pièce de serrage 5 s'étend en longueur selon une forme généralement rectangulaire orientée verticalement, présentant un petit côté inférieur sur lequel est ménagé l'autre de la rampe 8 ou de la portion de glissement 9, deux grands côtés latéraux configurés le cas échéant pour coopérer avec des parois latérales de guidage 45.1, 45.2 de la platine, et un petit côté supérieur sur lequel est ménagée la deuxième surface de blocage 53. Plus généralement, selon des exemples, indépendamment de la forme générale de la pièce de serrage, la rampe 8 ou portion de glissement 9 portée par la pièce de serrage 5 est située sur un côté opposé à celui qui présente la deuxième surface de blocage 53.

Par ailleurs, la rampe ou portion de glissement est située à une distance comprise entre 25 mm et 85mm de la deuxième surface de blocage 53.

Selon des exemples, le deuxième orifice de serrage 54 est ménagé, dans la pièce de serrage 5, entre la deuxième surface de blocage 53 et celle de la rampe 8 ou de la portion de glissement 9 qui est portée par la pièce de serrage 5.

Selon un exemple, le deuxième orifice de serrage 54, un plan médian de l'une de la rampe 8 ou de la portion de glissement 9, et un plan médian de la deuxième surface de blocage 53 sont alignés le long de la direction de serrage.

Selon un exemple, le deuxième orifice de serrage 54 est positionné sur la pièce de serrage à proximité de la rampe 8 ou de la portion de glissement 9, en ce sens qu'il est plus proche de la rampe 8 ou de la portion de glissement 9 que de la deuxième surface de blocage 53.

Une configuration semblable est possible pour la platine 4, dans laquelle le premier orifice de serrage 44 peut être ménagé, dans la platine 4, entre la première surface de blocage 43 et celle de la rampe 8 ou de la portion de glissement 9 qui est portée par la platine 4.

Selon un exemple, le premier orifice de serrage 44, un plan médian de l'autre de la rampe 8 ou de la portion de glissement 9, et un plan médian de la première surface de blocage 43 sont alignés le long de la direction de serrage.

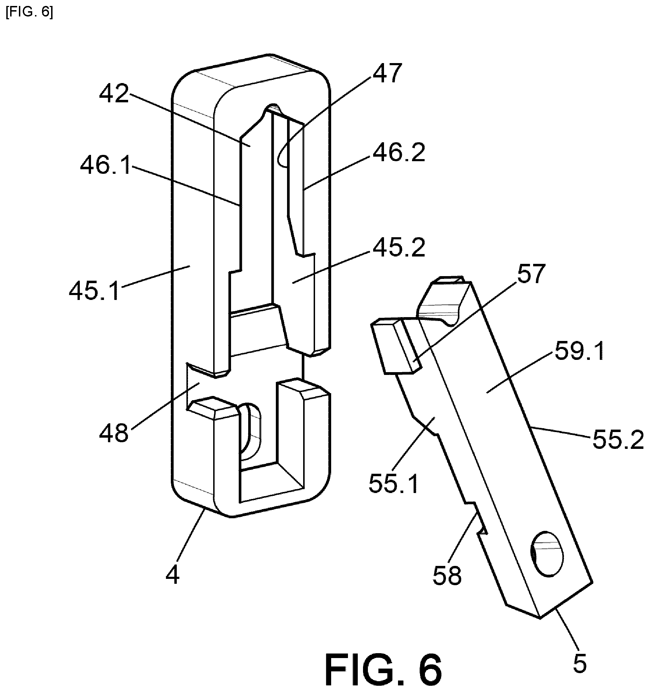

Selon un exemple, notamment tel que représenté en figure 6, la platine 4 comprend deux parois latérales de guidage 45.1, 45.2 s'étendant au moins partiellement entre la première surface de blocage 43 et l'une ou l'autre de la rampe 8 ou de la portion de glissement 9 selon la direction de serrage. Les parois latérales de guidage 45.1, 45.2 pouvant alors coopérer avec des côtés latéraux 55.1, 55.2 de la pièce de serrage 5.

Selon un exemple, le premier orifice de serrage 44 est positionné sur la platine 4 à proximité de la rampe 8 ou de la portion de glissement 9, en ce sens qu'il est plus proche de la rampe 8 ou de la portion de glissement 9 que de la première surface de blocage 43.

Selon un exemple, concernant l'une ou l'autre de la platine 4 ou de la pièce de serrage 5, la rampe 8 ou la portion de glissement 9 est ménagée à une distance comprise entre 25 et 85 mm de la première ou deuxième surface de blocage 43, 53. Selon un exemple, concernant l'une ou l'autre de la platine 4 ou de la pièce de serrage 5, le premier ou le deuxième orifice de serrage 44, 54 est ménagé à une distance inférieure à 30 mm de la rampe 8 ou de la portion de glissement 9.

Selon un exemple, les deux parois latérales de guidage 45.1, 45.2 comprennent chacune une nervure de guidage 46.1, 46.2 présentant une surface de butée 47 s'étendant perpendiculairement à l'axe de la vis de serrage 6 parallèlement à la surface arrière 41 de la platine 4, une surface de butée complémentaire 57 de la pièce de serrage 5 étant configurée pour coopérer avec la surface de butée 47 des deux nervures de guidage 46.1, 46.2 de la platine 4 afin de guider la pièce de serrage 5 et d'empêcher qu'elle ne s'éloigne du profilé 3 lors du serrage de la vis de serrage 6.

Selon un exemple, la surface de butée 47 de chacune des nervures de guidage 46.1, 46.2 de la platine 4 est orientée vers le bas, autrement dit vers le profilé 3, alors que la surface de butée complémentaire 57 de la pièce de serrage 5 est orientée vers le haut, autrement dit vers l'extérieur du convoyeur 10. Leur complémentarité permet notamment un maintien de la pièce de serrage 5 dans la platine 4.

En particulier, la platine 4 peut présenter un passage latéral 48 pouvant traverser le contour 420, et/ou l'une des parois latérales de guidage 45.1, 45.2. Dans ce cas, la pièce de serrage 5 peut comprendre une encoche 58 positionnée de sorte que le passage latéral 48 de la platine 4 débouche sur ladite encoche 58 de la pièce de serrage 5 lorsque l'organe de serrage 6 est serré. De cette façon, un outil peut être employé pour atteindre l'encoche 58 de la pièce de serrage 5, rendue accessible par le passage latéral 48, de sorte à déloger la pièce de serrage 5, préférentiellement après avoir desserré l'organe de serrage 6. Selon un exemple, le dispositif de fixation 1 comprend deux passages latéraux 48 et deux encoches 58.

Selon un exemple, et notamment tel que représenté en figure 3, dans lequel la platine 4 comporte un fond 421, le fond peut permettre de rigidifier la platine 4 en liant les deux grands côtés latéraux et le côté inférieur du contour 420 de la platine. Selon un exemple, un point bas de la rampe constitue une arête inférieure du fond 421.

Selon l'exemple représenté notamment en figures 4, 7 et 9, l'organe de serrage est une vis en coopération avec un écrou.

Selon un exemple, l'écrou est une pièce rapportée munie d'un filetage. Selon d'autres exemples, l'écrou est un filetage ménagé dans l'orifice du profilé 3, ou encore un filetage ménagé dans une pièce fixée au profilé, par exemple soudée au profilé.

De manière générale, l'écrou 7 est positionné d'un premier côté orienté vers l'intérieur du profilé 3 et la vis 6 est insérée depuis un deuxième côté orienté vers l'extérieur du profilé. Cela dit, il n'est pas exclu de procéder de la manière inverse.

Selon un exemple, le premier orifice de serrage 44 de la platine 4 et le deuxième orifice de serrage 54 de la pièce de serrage 5 sont oblongs. Dans une configuration où le dispositif de fixation 1 s'étend verticalement, les orifices 44, 54 présentent une longueur selon la direction verticale qui est plus grande que leur largeur. De manière générale, les orifices 44, 54 sont oblongs dans la direction de serrage.

Selon un exemple, le premier orifice de serrage 44 de la platine présente une longueur plus importante que celle de la pièce de serrage 5 selon la direction de serrage, de sorte à absorber le glissement de la pièce de serrage 5 le long de la platine 4 lors du serrage de l'organe de serrage 6.

Selon un exemple, une portion de l'ouverture 42 de la platine 4 est partiellement obstruée par la pièce de serrage 5 lors du serrage de l'organe de serrage 6, de sorte qu'une fois le serrage effectué, l'aire de la portion de l'ouverture 42 obstruée représente au moins 50% de l'aire de l'ouverture 42. Une telle configuration permet de concevoir une ouverture 42 particulièrement grande, de sorte à garantir le passage d'un connecteur 26 si le rouleau 2 comporte un câble 25.

Selon un exemple, notamment dans lequel la platine 4 s'étend verticalement, l'arbre de montage 21 occupe une portion supérieure de l'ouverture 42, et une portion inférieure de l'ouverture 42 est obstruée par la pièce de serrage 5. Dans ce cas, la portion inférieure est plus grande que la portion supérieure de l'ouverture 42.

Selon un exemple particulier, la platine 4 comprend une clavette 49 s'étendant transversalement à la platine 4, par exemple en largeur de la platine selon une direction horizontale. La clavette 49 peut être venue de matière avec la platine 4 et s'étendre en saillie de sa surface arrière 41. La clavette 49 est ainsi configurée pour coopérer avec une fente 39 ménagée dans le profilé 3 lors du montage de la platine 4 contre le profilé 3. En effet, la fente 39 peut présenter une forme complémentaire de la clavette 49, typiquement un poinçonnage rectangulaire, réalisant une fenêtre légèrement plus grande que la clavette 49, de sorte que la clavette 49 puisse pénétrer dans la fente 39 et réaliser un appui supplémentaire de la platine 4 sur le profilé 3. Une telle clavette 49 peut notamment contribuer au maintien du dispositif de fixation 1 en position lors du serrage de l'organe de serrage 6.

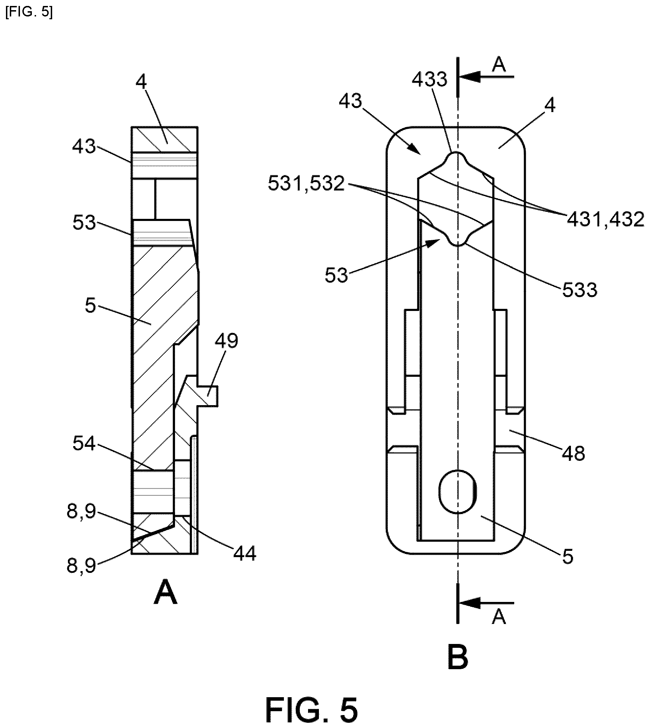

Selon un exemple, la première surface de blocage 43 et la deuxième surface de blocage 53 comprennent chacune deux pans adjacents 431, 432, 531, 532 opposés. Une telle configuration est particulièrement visible en figure 5 selon un exemple.

Selon d'autres exemples, l'une de la première surface de blocage 43 et de la deuxième surface de blocage 53 comprend un pan horizontal, et l'autre comprend deux pans inclinés. Indépendamment de leur agencement, les pans réalisent un contact surfacique avec l'arbre de montage 21 ce qui permet de répartir les efforts et minimiser l'usure de l'arbre 21 qui pourrait être dû à l'effort de serrage.

Selon d'autres exemples, les surfaces de blocages 43, 53 ne comprennent pas de pans, mais des arêtes saillantes ou présentant un congé, configuré pour réaliser un appui linéaire sur l'arbre de montage 21. Les surfaces d'appui ainsi constituées s'étendant selon une direction parallèle à l'axe du rouleau 2. Une telle configuration permet au dispositif de fixation 1 de coopérer avec diverses formes d'arbre de montage 21, par exemple avec un arbre cylindrique de révolution.

Selon une configuration, notamment dans laquelle la platine 4 s'étend verticalement, la première surface de blocage 43 comprend un sommet, formant un angle entre deux pans inclinés s'étendant latéralement depuis ledit sommet vers le bas. De cette façon, les deux pans inclinés forment la portion supérieure d'un hexagone et peut coopérer avec un arbre de montage hexagonal. Par ailleurs, cette configuration présente l'avantage de réaliser un centrage naturel de la platine 4 sur le convoyeur 10, la première surface de blocage 43 venant d'emblée se positionner de façon centrée sur l'arbre de montage 21 par coopération entre les formes des deux pièces.

Selon un exemple particulier, la première surface de blocage 43 et la deuxième surface de blocage 53 comprennent chacune une rainure 433, 533 creusée dans l'une et l'autre de la platine 4 et de la pièce de serrage 5 en lieu et place de l'arête commune aux deux pans inclinés adjacents 431, 432, 531, 532. En particulier, la rainure peut présenter un fond arrondi. Une telle rainure permet de minimiser les concentrations de contrainte au niveau de l'angle formé par les deux pans.

Il est maintenant fait référence à la figure 7 qui montre plus particulièrement un exemple de procédé de montage selon la présente divulgation. En effet, le procédé comprend, en premier lieu, le passage de l'arbre de montage 21 du rouleau 2 à travers l'ouverture de réception 31 du profilé. Selon un exemple, et comme cela a été précédemment décrit, il peut y avoir une complémentarité de forme entre l'ouverture de réception 31 et l'arbre de montage 21 qui permet alors un premier blocage en rotation de l'arbre, et permettre éventuellement aussi de guider l'arbre dans une position angulaire particulière. Selon un exemple, la forme de l'ouverture de réception 31 est configurée pour guider l'arbre de montage 21 de sorte qu'il présente, en sa portion supérieure, un sommet reliant deux pans inclinés s'étendant latéralement vers le bas, comme c'est le cas dans l'exemple représenté en figure 7.

Après le passage de l'arbre de montage 21, la platine 4 est positionnée de sorte que la première surface de blocage 43 coopère avec une première partie 211 de la surface extérieure radiale 210 de l'arbre de montage 21 du rouleau 2. Par ailleurs, la surface arrière 41 de la platine est plaquée contre le profilé 3. La platine 4 est positionnée également de sorte que le premier orifice de serrage 44 soit positionné en vis-à-vis du troisième orifice de serrage 34 du profilé 3. Selon un exemple décrit précédemment, la première partie 211 de la surface extérieure radiale 210 de l'arbre de montage 21 est une portion supérieure de l'arbre, et la platine 4 est ainsi suspendue sur l'arbre 21, de sorte à s'étendre verticalement vers le bas. Selon une telle configuration, la platine se positionne naturellement, par gravité, de sorte que le premier orifice de serrage 44 tombe en vis-à-vis du troisième orifice de serrage 34. À cette fin, le troisième orifice de serrage 34 est ménagé dans le profilé 3 de sorte qu'il est aligné verticalement sous l'ouverture de réception 31.

Suite au positionnement de la platine, ou au préalable de son positionnement, la pièce de serrage 5 est montée sur ou dans la platine 4, de sorte que l'une de la rampe 8 ou de la portion de glissement 9 coopère avec l'autre de la rampe 8 ou de la portion de glissement 9. La pièce de serrage 5 est également positionnée de sorte que le second orifice de serrage 54 soit en vis-à-vis du premier orifice de serrage 44 de la platine 4, et de sorte que la deuxième surface de blocage 53 soit en vis-à-vis de la première surface de blocage 43. De cette façon, l'arbre de montage 21 du rouleau 2 s'étend entre la première surface de blocage 43 et la seconde surface de blocage 53 du dispositif de fixation.

Une fois que la platine 4 et la pièce de serrage 5 sont montées sur le convoyeur, l'organe de serrage 6 est passé, de préférence depuis un côté extérieur du profilé 3, au travers du deuxième orifice de serrage 54, puis du premier orifice de serrage 44, et enfin du troisième orifice de serrage 34. Un passage selon l'ordre inverse est possible si l'organe de serrage 6 est inséré par un côté intérieur du profilé 3.

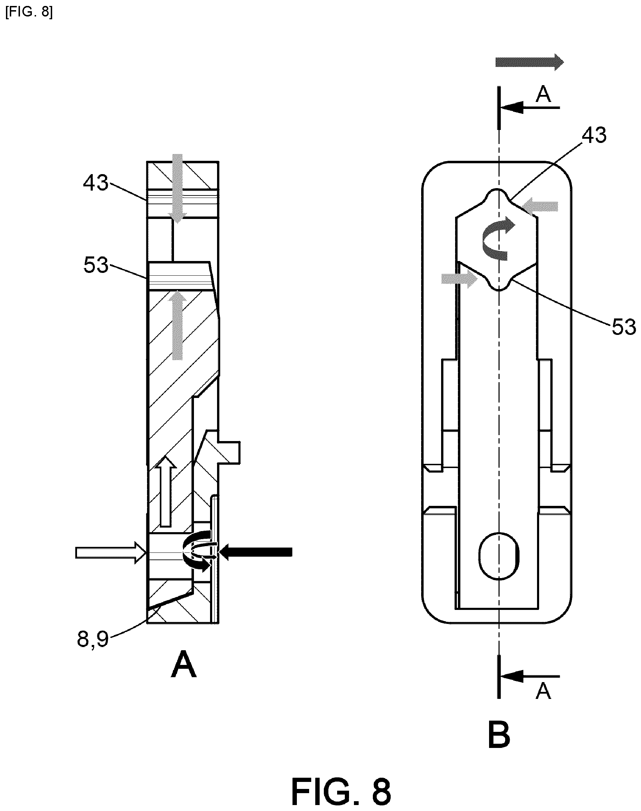

L'organe de serrage 6 est ensuite serré, faisant que la pièce de serrage 5 se rapproche de la platine 4 de sorte qu'un glissement relatif entre la portion de glissement 9 et la rampe 8 induise un rapprochement de la deuxième surface de blocage 53 vers la première surface de blocage 43 de la platine 4 jusqu'à bloquer l'arbre de montage 21 du rouleau 2. La distribution des efforts et l'effet de la coopération entre la rampe 8 et la portion de glissement 9 est notamment représentée en figure 8a. Le couple résistant induit par le serrage des deux surfaces de blocage 43, 53 sur l'arbre de montage 21 est représenté en figure 8b.

Lors de cette action de serrage, l'organe de serrage 6 présente une longueur initiale « Li » entre d'une part la surface de contact extérieure 61 entre l'organe de serrage 6 et la surface avant 59.1 de la pièce de serrage 5 et d'autre part la surface de contact intérieure 71 entre l'organe de serrage 6 et le côté intérieur du profilé 3 ; et il existe un jeu initial « Ji » non nul entre la deuxième surface de blocage 53 et l'arbre de montage 21, tel que représenté, à titre d'exemple, sur la vue 9a de la figure 9. L'action de serrage permet de diminuer la longueur initiale de l'organe de serrage 6 jusqu'à une longueur finale « Lf ». La longueur de l'organe de serrage 6 passe ainsi de « Li » à « Lf », avec Lf<Li. La coopération entre la rampe 8 et la portion de glissement 9 permet de rapprocher la deuxième surface de blocage 53 de l'arbre de montage 21 jusqu'à suppression du jeu entre ces deux éléments qui, en fin de serrage, sont serrés en contact l'un contre l'autre, tel que représenté à titre d'exemple sur la vue 9b de la figure 9.

Sur cette figure 9, la pièce de serrage 5 est montrée dans une position « théorique » qui semble entrer en interférence avec la platine dans les cas où la platine comporte des nervures de guidage par exemple telles que décrites précédemment. On comprendra que la position de la pièce de serrage 5 peut également être inclinée par rapport à la platine 4.

Dans des cas selon lesquels le rouleau 2 comprend un câble 25 électrique muni d'un connecteur 26 sortant à l'extérieur du rouleau 2 comprenant un canal 23 débouchant de l'extrémité distale 24 de l'arbre de montage 21 du rouleau 2, le procédé comprend, au préalable du positionnement de la platine,
- le passage du connecteur 26 et du câble 25 à travers l'ouverture de réception 31 du profilé,
- le passage du connecteur 26 et du câble 25 à travers l'ouverture 42 de la platine 4.

Selon un exemple dans lequel la platine 4 comprend deux parois latérales de guidage 45.1, 45.2, le procédé peut comprendre, lors du montage de la pièce de serrage 5 sur la platine 4, l'insertion de la pièce de serrage 5 entre les deux parois latérales de guidage 45.1, 45.2 de la platine 4. Ainsi, la pièce de serrage 5 est maintenue latéralement dans un logement prévu dans la platine 4, de sorte à centrer la pièce de serrage 5 sur la platine 4. De cette façon, on limite également le risque que le deuxième orifice de serrage 54 de la pièce de serrage 5 ne se décale latéralement du premier orifice de serrage 44 de la platine 4.

Selon un exemple particulier dans lequel les deux parois latérales de guidage 45.1, 45.2 comprennent chacune une nervure de guidage 46.1, 46.2, le procédé peut comprendre, lors de l'insertion de la pièce de serrage 5 entre les parois latérales de guidage 45.1, 45.2, le passage de la surface de butée complémentaire 57 sous la surface de butée 47 des nervures de guidage 46.1, 46.2 de la platine 4. À cette fin, la pièce de serrage 5 peut être inclinée lors de son insertion dans la platine, de la façon illustrée par exemple en figure 6, de sorte à présenter, en premier, une portion supérieure de la pièce de serrage 5 comprenant la deuxième surface de blocage 53 et la butée complémentaire 57, de sorte à la glisser sous les nervures de guidage 46.1, 46.2.

Par exemple, la surface de butée complémentaire 57 peut être portée par deux excroissances latérales faisant saille des côtés latéraux 55.1, 55.2 de la pièce de serrage 5. Dans d'autres exemples, la surface de butée complémentaire 57 est constituée par une portion d'une surface avant 59.1 de la pièce de serrage 5. De préférence, la surface de butée complémentaire est ménagée à proximité de la deuxième surface de blocage 53, en une portion supérieure de la pièce de serrage 5.

Selon un exemple particulier, notamment visible en figure 9, une surface arrière 59.2 de la pièce de serrage peut présenter, en une zone adjacente avec la deuxième surface de blocage 53, un chanfrein 59.3 qui réalise un retrait de matière de la pièce de serrage 5. Selon une application, un tel chanfrein 59.3 peut faciliter l'insertion de la pièce de serrage 5 sous les nervures de guidage 46.1, 46.2 de la platine 4, en retirant de la matière qui pourrait, par l'inclinaison de la pièce de serrage 5, entrer en interférence avec le profilé 3 et empêcher le passage de la pièce de serrage 5.

## Revendications

1. Dispositif de fixation (1) d'un rouleau (2) de convoyeur (10) sur un profilé (3), le rouleau (2) comprenant une portion cylindrique (20) et un arbre de montage (21) s'étendant en saillie d'un flan (22) de la portion cylindrique (20), l'arbre de montage (21) comprenant une extrémité distale (24) traversant le profilé (3) par une ouverture de réception (31), le dispositif de fixation (1) comprenant :
- une platine (4), comprenant :
∘ une surface arrière (41) configurée pour reposer contre le profilé (3),
∘ une ouverture (42) configurée pour permettre le passage de l'extrémité distale (24) de l'arbre de montage (21) du rouleau (2),
∘ une première surface de blocage (43) définissant une portion d'un contour (420) de l'ouverture (42), la première surface de blocage (43) étant configurée pour coopérer avec une première partie (211) de la surface extérieure radiale (210) de l'arbre de montage (21) du rouleau (2),
∘ un premier orifice de serrage (44) traversant la platine (4) et débouchant sur la surface arrière (41),
- une pièce de serrage (5), destinée à être positionnée dans la platine (4), et comprenant :
∘ une deuxième surface de blocage (53) en vis-à-vis de la première surface de blocage (43) de la platine (4), la deuxième surface de blocage (53) étant configurée pour coopérer avec une deuxième partie (212) de la surface extérieure radiale (210) de l'arbre de montage (21) du rouleau (2), ladite deuxième partie (212) étant opposée à la première partie (211) de la surface extérieure radiale (210) de l'arbre de montage (21),
∘ un deuxième orifice de serrage (54) faisant face au premier orifice de serrage (44) de la platine (4),
- un organe de serrage (6) configuré pour traverser à la fois le deuxième orifice de serrage (54) de la pièce de serrage (5), le premier orifice de serrage (44) de la platine (4), et un troisième orifice de serrage (34) du profilé (3), l'organe de serrage (6) permettant un rapprochement de la platine (4) et de la pièce de serrage (5) selon une direction de rapprochement,
l'une de la platine (4) ou de la pièce de serrage (5) comprenant une rampe (8) inclinée, et l'autre comprenant une portion de glissement (9) configurée pour coopérer avec la rampe (8), de sorte que le serrage de l'organe de serrage (6) induise un rapprochement de la deuxième surface de blocage (53) vers la première surface de blocage (43) de la platine (4) selon une direction de serrage jusqu'à bloquer l'arbre de montage (21) du rouleau (2).

2. Dispositif de fixation selon la revendication précédente, dans lequel l'organe de serrage (6) comprend une vis de serrage coopérant avec un écrou (7) pour rapprocher la platine (4) et la pièce de serrage (5), la rampe (8) étant inclinée par rapport à l'axe de la vis de serrage.

3. Dispositif de fixation selon l'une des revendications précédentes, dans lequel la rampe forme un angle avec la direction de rapprochement compris entre 3° et 22°, préférentiellement l'angle de la rampe est sensiblement égal à 5° ou sensiblement égal à 20°.

4. Dispositif de fixation selon l'une des revendications précédentes, dans lequel une portion de l'ouverture (42) de la platine (4) est partiellement obstruée par la pièce de serrage (5) lors du serrage de l'organe de serrage, de sorte qu'une fois le serrage effectué, l'aire de la portion de l'ouverture (42) obstruée représente au moins 50% de l'aire de l'ouverture (42).

5. Dispositif de fixation selon l'une des revendications précédentes, dans lequel la platine comprend deux parois latérales de guidage (45.1, 45.2), s'étendant au moins partiellement entre la première surface de blocage et l'une ou l'autre de la rampe (8) ou de la portion de glissement (9) selon la direction de serrage, les parois latérales de guidage (45.1, 45.2) étant configurées pour coopérer avec des côtés latéraux (55.1, 55.2) de la pièce de serrage (5).

6. Dispositif de fixation selon la revendication précédente, dans lequel les deux parois latérales de guidage (45.1, 45.2) comprennent chacune une nervure de guidage (46.1, 46.2) présentant une surface de butée (47) s'étendant perpendiculairement à la direction de rapprochement, une surface de butée complémentaire (57) de la pièce de serrage (5) étant configurée pour coopérer avec la surface de butée (47) des deux nervures de guidage (46.1, 46.2) de la platine (4) afin de guider la pièce de serrage (5) et d'empêcher qu'elle ne s'éloigne du profilé (3) lors du serrage de la vis de serrage (6).

7. Dispositif de fixation selon l'une des revendications précédentes, dans lequel l'arbre de montage (21) du rouleau (2) présente une section transversale hexagonale, la première surface de blocage (43) et la deuxième surface de blocage (53) comprenant chacune deux pans opposés adjacents et inclinés l'un par rapport à l'autre (431, 432, 531, 532).

8. Dispositif de fixation selon la revendication précédente, dans lequel la première surface de blocage (43) et la deuxième surface de blocage (53) comprenant chacune une rainure (433, 533) creusée dans l'une et l'autre de la platine (4) et de la pièce de serrage (5), chaque rainure (433, 533) étant positionnée de sorte qu'elle s'étende en lieu et place d'une arête commune aux deux pans adjacents (431, 432, 531, 532).

9. Convoyeur (10) comprenant un profilé (3) et un rouleau (2) comprenant une portion cylindrique (20) et un arbre de montage (21) s'étendant en saillie d'un flan (22) de la portion cylindrique (20), l'arbre de montage (21) comprenant une extrémité distale (24) traversant le profilé (3) par une ouverture de réception (31), le rouleau (2) étant fixé sur le profilé (3) par un dispositif de fixation (1) selon l'une des revendications précédentes.

10. Convoyeur (10) selon la revendication 9, dans lequel la platine (4) et la pièce de serrage (5) s'étendent en longueur selon une direction verticale, la première partie (211) de l'arbre de montage (21) étant une portion supérieure de l'arbre de montage (21) sur laquelle repose par gravité la première surface de blocage (43) de la platine (4) lorsqu'elle est positionnée contre le profilé (3), et la deuxième partie (212) de l'arbre de montage étant une portion inférieure de l'arbre de montage (21), la direction de serrage étant selon la direction verticale.

11. Procédé de fixation d'un rouleau (2) de convoyeur (10) sur un profilé (3) avec un dispositif de fixation (1) selon l'une des revendications précédentes, le rouleau (2) comprenant une portion cylindrique (20) et un arbre de montage (21) s'étendant en saillie d'un flan (22) de la portion cylindrique (20), l'arbre de montage (21) comprenant une extrémité distale (24) traversant le profilé (3) par une ouverture de réception (31), le procédé comprenant :
- le passage de l'arbre de montage (21) du rouleau (2) à travers l'ouverture de réception (31) du profilé,
- le positionnement de la platine (4) de sorte que la première surface de blocage (43) coopère avec une première partie (211) de la surface extérieure radiale (210) de l'arbre de montage (21) du rouleau (2), et de sorte que la surface arrière (41) de la platine soit plaquée contre le profilé (3), et de sorte que le premier orifice de serrage (44) soit positionné en vis-à-vis du troisième orifice de serrage (34) du profilé (3),
- le montage de la pièce de serrage (5) sur la platine (4), en positionnant la pièce de serrage (5) de sorte que l'une de la rampe (8) ou de la portion de glissement (9) coopère avec l'autre de la rampe (8) ou de la portion de glissement (9), et de sorte que le second orifice de serrage (54) de la pièce de serrage (5) soit en vis-à-vis du premier orifice de serrage (44) de la platine (4), et de sorte que la deuxième surface de blocage (53) soit en vis-à-vis de la première surface de blocage (43) de telle façon que l'arbre de montage (21) du rouleau (2) s'étende entre la première surface de blocage (43) et la seconde surface de blocage (53) du dispositif de fixation,
- le passage d'une vis de serrage (6) au travers des premier, deuxième et troisième orifices de serrage (44, 54, 34),
- le serrage de l'organe de serrage, faisant que la pièce de serrage (5) se rapproche de la platine (4) de sorte qu'un glissement relatif entre la portion de glissement (9) et la rampe (8) induise un rapprochement de la deuxième surface de blocage (53) vers la première surface de blocage (43) de la platine (4) jusqu'à bloquer l'arbre de montage (21) du rouleau (2).

12. Procédé de fixation selon la revendication 11, dans lequel la platine (4) du dispositif de fixation (1) comprend deux parois latérales de guidage (45.1, 45.2), s'étendant au moins partiellement entre la première surface de blocage (43) et l'une ou l'autre de la rampe (8) ou de la portion de glissement (9), les parois latérales de guidage (45.1, 45.2) étant configurées pour coopérer avec des côtés latéraux (55.1, 55.2) de la pièce de serrage (5), le procédé comprenant, lors du montage de la pièce de serrage (5) sur la platine (4), l'insertion de la pièce de serrage (5) entre les deux parois latérales de guidage (45.1, 45.2) de la platine (4).

13. Procédé de fixation selon la revendication précédente, dans lequel les deux parois latérales de guidage (45.1, 45.2) comprennent chacune une nervure de guidage (46.1, 46.2) présentant une surface de butée (47) s'étendant parallèlement à la surface arrière (41) de la platine (4), une surface de butée complémentaire (57) de la pièce de serrage (5) étant configurée pour coopérer avec la surface de butée (47) des deux nervures de guidage (46.1, 46.2) de la platine (4), le procédé comprenant, lors de l'insertion de la pièce de guidage (5) entre les parois latérales de guidage (45.1, 45.2), le passage de la surface de butée complémentaire (57) sous la surface de butée (47) des nervures de guidage (46.1, 46.2) de la platine (4).
